# EUROPÄISCHE PATENTANMELDUNG

(11) **EP 3 367 048 A1**
(43) Veröffentlichungstag der Anmeldung: **29.08.2018**
(21) Anmeldenummer: 18156211.7
(22) Anmeldetag: 12.02.2018
(51) Int. Cl.: F41H 7/02, B60K 13/02, B63G 8/36

(54) **TAUCHFÄHIGER PANZER**

(30) Priorität: 23.02.2017 DE 102017103720
(71) Anmelder: FFG Fensburger Fahrzeugbau Gesellschaft mbH, 24939 Flensburg (DE)
(72) Erfinder: Kamper, Jörg, 22523 Hamburg (DE)
(74) Vertreter: Lobemeier, Martin Landolf

(57) **Zusammenfassung**

Tauchfähiger Panzer (10) mit einem Bedienraum zur Aufnahme einer Panzerbesatzung mit einer auf der Oberseite des Panzers (10) mündenden Luke (20) und einem einen Verbrennungsmotor aufnehmenden Triebwerksraum mit wenigstens einem auf der Außenseite des Panzers (10) mündenden Ansaugdurchlass (30), wobei der Panzer (10) zur Durchführung von Unterwasserfahrten einen mit der Luke (20) verbindbaren ersten Tauchschacht (25) aufweist, gekennzeichnet durch einen mit dem Ansaugdurchlass (30) verbindbaren zweiten Tauchschacht (35).

## Beschreibung

Die Erfindung betrifft einen tauchfähigen Panzer mit einem Bedienraum zur Aufnahme einer Panzerbesatzung mit einer auf der Oberseite des Panzers mündenden Luke und einem einen Verbrennungsmotor aufnehmenden Triebwerksraum mit wenigstens einem auf der Außenseite des Panzers mündenden Ansaugdurchlass, wobei der Panzer zur Durchführung von Unterwasserfahrten einen mit der Luke verbindbaren Tauchschacht aufweist.

Tauchfähige Panzer, beispielsweise Bergepanzer, sind zur Durchführung von Tauchfahrten standardmäßig mit einem Tauchschacht ausgerüstet, der auf der Kommandantenluke montiert wird. Zusätzlich wird im Tauchbetrieb eine Tauchhydraulik aktiviert, die sämtliche Ansaugdurchlässe in der Wanne hydraulisch verschließt und eine Klappe öffnet, die eine Verbindung zwischen Triebwerksraum und Bedienraum herstellt, sodass die im Tauchbetrieb für den Dieselmotor benötigte Verbrennungsluft erst durch den Tauchschacht und anschließend durch den Bedienraum ansaugt.

Nachteilig ist dass die Besatzung bei einer Luftführung vom Betriebsraum in den Triebwerksraum einer hohen Lärmbelastung ausgesetzt ist. Weiterhin kann die Besatzung einer erhöhten Abgasbelastung ausgesetzt sein, falls das austretende Abgas nach dem Durchtritt durch die Wasseroberfläche wieder über den Tauchschacht über der Kommandantenluke angesaugt wird.

Aufgabe der Erfindung ist es daher, einen tauchfähigen Panzer, insbesondere einen Bergepanzer, zu schaffen, dessen Besatzung vor einer hohen Lärm- und Abgasbelastung weitgehend geschützt ist.

Diese Aufgabe wird erfindungsgemäß durch den Panzer mit den Merkmalen von Anspruch 1 gelöst. Die Unteransprüche geben vorteilhafte Ausgestaltungen der Erfindung wieder.

Der Grundgedanke der Erfindung ist es, die für den Betrieb des Verbrennungsmotors benötigte Frischluft nicht wie üblich aus dem Betriebsraum anzusaugen, sondern den Triebwerksraum durch einen separaten Tauchschacht zuzuführen. So ist es möglich die Verbrennungsluft für den Verbrennungsmotor ausschließlich über den zweiten Tauchschacht oder zusätzlich zur aus dem Betriebsraum angesaugten Luft anzusaugen.

Insbesondere können bei der Bereitstellung von Frischluft an den Verbrennungsmotor durch den zweiten Tauchschacht Betriebsraum und Triebwerksraum voneinander (hermetisch) getrennt sein, sodass auch die Lärmexposition der Mannschaft von Seiten des Triebwerksraums deutlich vermindert ist. Desgleichen wird die Mannschaft keiner den Betriebsraum in Richtung Triebwerksraum durchströmenden Zugluft ausgesetzt und umgekehrt können keine Abgase aus dem Triebwerksraum in den Betriebsraum gelangen.

Vorteil der Erfindung ist, dass sich der Bedienraum und der Triebwerksraum hinsichtlich des Luftbedarfs nicht gegenseitig beeinflussen. So behindert zum Beispiel der Kommandant mit seiner Ausrüstung nicht den Luftstrom zum Motor und somit auch nicht dessen Leistungsfähigkeit. Darüber hinaus ist durch die Trennung von Triebwerkraum und Bedienraum auch die Lärmexposition für die Besatzung reduziert.

Erfindungsgemäß ist also ein tauchfähiger Panzer mit einem Bedienraum zur Aufnahme einer Panzerbesatzung mit einer auf der Oberseite des Panzers mündenden Luke und einem einen Verbrennungsmotor aufnehmenden Triebwerksraum mit wenigstens einem auf der Außenseite des Panzers mündenden Ansaugdurchlass vorgesehen, wobei der Panzer zur Durchführung von Unterwasserfahrten einen mit der Luke verbindbaren ersten Tauchschacht und einen mit dem Ansaugdurchlass verbindbaren zweiten Tauchschacht aufweist.

Bevorzugt sind der Bedienraum und der Triebwerksraum als zwei voneinander getrennte Räume ausgebildet.

Alternativ sind der Bedienraum und der Triebwerksraum mittels eines durch ein Stellmittel verschließbaren Kanals miteinander kommunizierend verbunden, sodass die Kommunikation zwischen dem Bedienraum und dem Triebwerksraum bei der Vorbereitung zu einer Tauchfahrt unterbunden werden kann.

Besonders bevorzugt weist ein erfindungsgemäß ausgestalteter Panzer eine auf eine Mehrzahl von Stellmitteln wirkende Steuerung zum Verschließen aller - mit Ausnahme der in den ersten Tauchschacht führenden Öffnung des Betriebsraums und in den zweiten Tauchschacht führenden Öffnung des Triebwerksraums - zwischen dem Betriebsraum und dem Triebwerksraum oder zwischen dem Bedienraum oder dem Triebwerksraum und der Umwelt Luft-führenden Öffnungen des Panzers zur Durchführung von Unterwasserfahrten auf. Vorteilhaft ist es, wenn der Ansaugdurchlass auf der Oberseite des Panzers angeordnet ist, sodass der erste und der zweite Tauchschacht in räumlicher Nähe zueinander montiert werden können.

Die Erfindung ist insbesondere vorteilhaft, wenn der Panzer als Bergepanzer ausgebildet ist.

Die Erfindung wird im Folgenden anhand von in den beigefügten Zeichnungen dargestellten, besonders bevorzugt ausgestalteten Ausführungsbeispielen näher erläutert. Es zeigen:
- Fig. 1: eine perspektivische Detailansicht eines bevorzugt ausgestalteten Panzers ohne darauf montierte Tauchschächte; und
- Fig. 2: eine perspektivische Detailansicht eines bevorzugt ausgestalteten Panzers mit den an der Einstiegsluke zum Betriebsraum und an einem Ansaugdurchlass des Triebwerksraums montierten Tauchschächten.

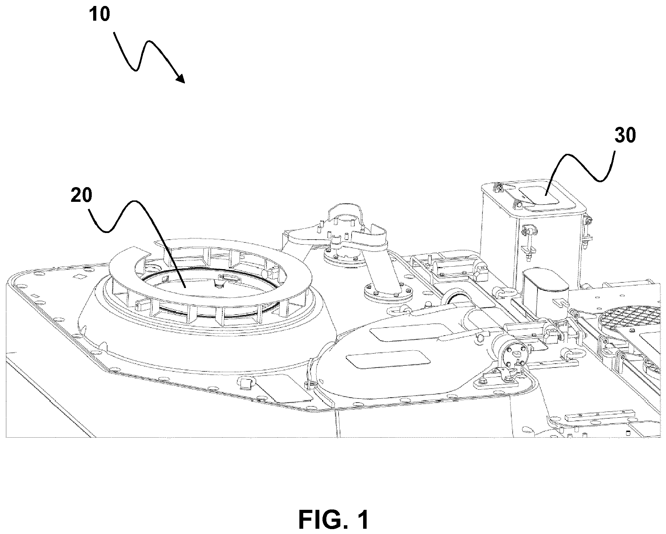

Fig. 1 zeigt eine perspektivische Detailansicht eines erfindungsgemäß ausgestalteten Panzers ohne darauf montierte Tauchschächte.

Fig. 1 zeigt den Aufbau eines erfindungsgemäß ausgestalteten Panzers 10 mit einer Luke 20 und einem auf der Oberseite des Panzers 10 angeordneten Ansaugdurchlass 30. Nicht ersichtlich hingegen ist, dass der (nicht dargestellte) Betriebsraum und der (nicht dargestellte) Triebwerksraum hinsichtlich der Luftführung vollkommen voneinander getrennt eingerichtet sind, sodass kein Luftaustausch zwischen den beiden Räumen stattfinden kann.

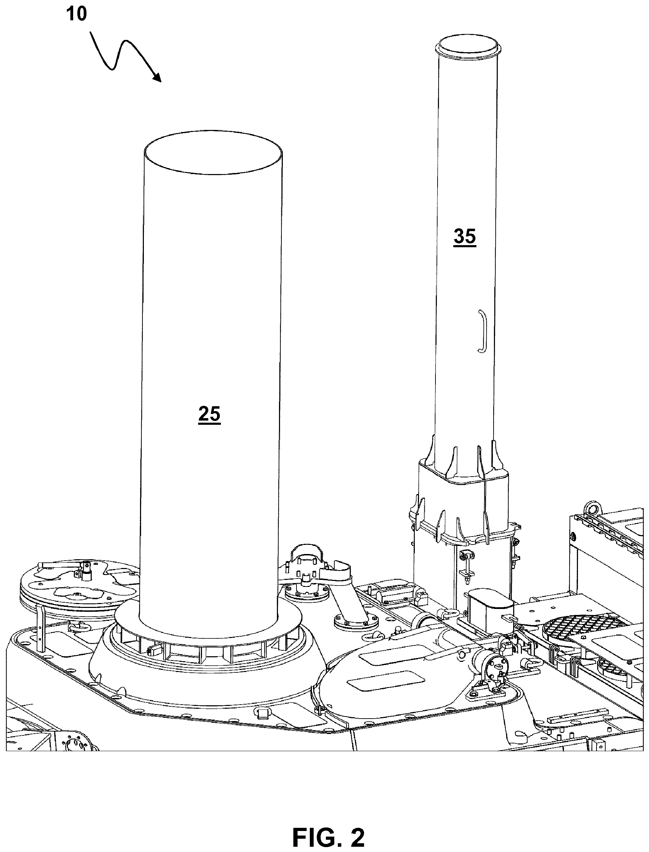

Fig. 2 zeigt hingegen eine perspektivische Detailansicht des bevorzugt ausgestalteten Panzers aus Fig. 1 mit den an der Einstiegsluke zum Betriebsraum und an einem Ansaugdurchlass des Triebwerksraums montierten Tauchschächten.

Auf der in den Betriebsraum führenden Einstiegsluke 20 ist ein erster Tauschacht 25 montiert und auf dem mit dem Triebwerksraum kommunizierenden Ansaugdurchlass 30 ist ein zweiter Tauchschacht 35 montiert. Hierfür ist insbesondere am Ansaugdurchlass 30 ein Flansch vorgesehen, an den der zweite Tauschschacht 35 mit einem entsprechenden Flansch angeschraubt werden kann.

Im Tauchbetrieb des Panzers 10 werden nun - mit Ausnahme des Ansaugdurchlasses 30 - sämtliche Ansaugdurchlässe des Triebwerkraums hydraulisch verschlossen. Um dem Triebwerk dennoch die notwendige Verbrennungsluft zuzuführen wird an den Ansaugdurchlass 30 in der Triebwerkraumabdeckung auf Höhe des Kommandantenlukenniveaus ein zweiter Tauchschacht 35 angeschlossen.

Für das Tauchfahren bis 4 m Wassertiefe wird beispielsweise bei einem Bergepanzer zusätzlich zum ersten Tauchschacht auf der Kommandantenluke 20 ein zweiter Tauch-Verbrennungsluftschacht 35 auf den Zuluftschacht 30 des Triebwerksraums geschraubt.

## Patentansprüche

1. Tauchfähiger Panzer (10) mit einem Bedienraum zur Aufnahme einer Panzerbesatzung mit einer auf der Oberseite des Panzers (10) mündenden Luke (20) und einem einen Verbrennungsmotor aufnehmenden Triebwerksraum mit wenigstens einem auf der Außenseite des Panzers (10) mündenden Ansaugdurchlass (30), wobei der Panzer (10) zur Durchführung von Unterwasserfahrten einen mit der Luke (20) verbindbaren ersten Tauchschacht (25) aufweist,
**gekennzeichnet durch**
einen mit dem Ansaugdurchlass (30) verbindbaren zweiten Tauchschacht (35).

2. Panzer (10) nach Anspruch 1, **dadurch gekennzeichnet, dass** der Bedienraum und der Triebwerksraum als zwei voneinander getrennte Räume ausgebildet sind.

3. Panzer (10) nach Anspruch 1, **dadurch gekennzeichnet, dass** der Bedienraum und der Triebwerksraum mittels eines durch ein Stellmittel verschließbaren Kanals miteinander kommunizierend verbunden sind.

4. Panzer (10) nach einem der vorhergehenden Ansprüche, **gekennzeichnet durch** eine auf eine Mehrzahl von Stellmitteln wirkende Steuerung zum Verschließen aller, mit Ausnahme der in den ersten Tauchschacht (25) führenden Öffnung des Betriebsraums und in den zweiten Tauchschacht (35) führenden Öffnung des Triebwerksraums, zwischen dem Betriebsraum und dem Triebwerksraum oder zwischen dem Bedienraum oder dem Triebwerksraum und der Umwelt Luft-führenden Öffnungen des Panzers (10) zur Durchführung von Unterwasserfahrten.

5. Panzer (10) nach einem der vorhergehenden Ansprüche, **dadurch gekennzeichnet, dass** der Ansaugdurchlass (30) auf der Oberseite des Panzers (10) angeordnet ist.

6. Panzer (10) nach einem der vorhergehenden Ansprüche, **dadurch gekennzeichnet, dass** der Panzer (10) ein Bergepanzer ist.
